# EUROPEAN PATENT APPLICATION

(11) **EP 2 463 689 A1**
(43) Date of publication of application: **13.06.2012**
(21) Application number: 11156252.6
(22) Date of filing: 28.02.2011
(51) Int. Cl.: G02B 3/00, F24J 2/08

(54) **LENS AND FABRICATION METHOD THEREOF.**

(30) Priority: 13.12.2010 TW 099224099
(71) Applicant: Everphoton Energy Corporation, Taipei 11493 (TW)
(72) Inventor: Chen, Yee-Lee, 104, TAIPEI CITY (TW); Huang, Yu-Pei, 701, TAINAN CITY (TW); Yang, Wen-Bin, 114, TAIPEI CITY (TW)
(74) Representative: Collin, Jérôme

(57) **Abstract**

A lens includes a glass substrate, and a silicone layer adhered to the glass substrate and having a pattern formed on an outer surface thereof. Since the light-transmissive silicone layer is directly adhered to the glass substrate, without the use of an adhesive layer, the fabrication cost and thickness of the lens are reduced, and the objective of thinning the lens is achieved.

## Description

### BACKGROUND OF THE INVENTION

### 1. Field of the Invention

The present invention relates to lenses and fabrication methods thereof, and more particularly, to a lens applied in a solar system and a fabrication method thereof.

### 2. Description of Related Art

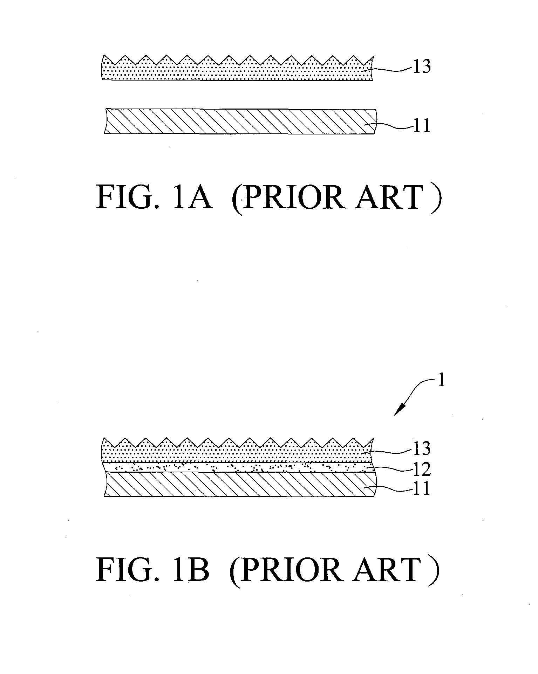

FIGs. 1A and 1B show a fabrication method of a silicone-on-glass (SOG) lens 1 in a solar cell. A silicone 13 having a lens structure is disposed on a glass substrate 11 through an adhesive layer 12. However, the use of the adhesive layer 12 increases the fabrication cost and thickness of the lens 1 and adversely affects thinning of the lens 1.

Therefore, there is a need to provide a lens and a fabrication method thereof so as to overcome the above-described drawbacks.

### SUMMARY OF THE INVENTION

In view of the above-described drawbacks, it is an object of the present invention to provide a thin lens and a fabrication method thereof.

Another object of the present invention is to provide a low-cost lens and a fabrication method thereof.

In order to achieve the above and other objects, the present invention provides a fabrication method of a lens, which comprises the steps of: disposing a molding board having a patterned surface over a glass substrate in a manner that the patterned surface faces the glass substrate and a molding space is formed between the patterned surface of the molding board and the glass substrate; introducing a light-transmissive compound into the molding space so as to form a light-transmissive body with a surface corresponding to the patterned surface; and removing the molding board while maintaining the light-transmissive body to be adhered to the glass substrate.

In an embodiment of the present invention, the glass substrate and the molding board are disposed in a mold.

In an embodiment of the present invention, the light-transmissive compound is introduced into the molding space by injection molding, such that the light-transmissive body is directly adhered to the glass substrate.

In an embodiment of the present invention, the light-transmissive compound is a thermosetting compound such as silicone. Preferably, the light-transmissive compound is optical silicone.

The present invention further provides a lens, which comprises: a glass substrate; and a silicone layer adhered to the glass substrate and having a pattern formed on an outer surface thereof

In an embodiment of the present invention, the silicone layer is made of optical silicone and directly adhered to the glass substrate.

According to the present invention, the light-transmissive body or the patterned silicon layer is directly formed on a glass substrate instead of through an adhesive layer as in the prior art, thus reducing the fabrication cost and overall thickness of the lens and facilitating thinning of the lens.

### BRIEF DESCRIPTION OF DRAWINGS

FIGs. 1A and 1B are cross-sectional views showing a fabrication method of a lens in the prior art; and
FIGs. 2A to 2D are cross-sectional views showing a fabrication method of a lens according to the present invention.

### DETAILED DESCRIPTION OF PREFERRED EMBODIMENTS

The following illustrative embodiments are provided to illustrate the disclosure of the present invention, these and other advantages and effects can be apparent to those in the art after reading this specification.

It should be noted that all the drawings are not intended to limit the present invention. Various modification and variations can be made without departing from the spirit of the present invention. Further, terms such as "one," "top," "above," etc. are merely for illustrative purpose and should not be construed to limit the scope of the present invention.

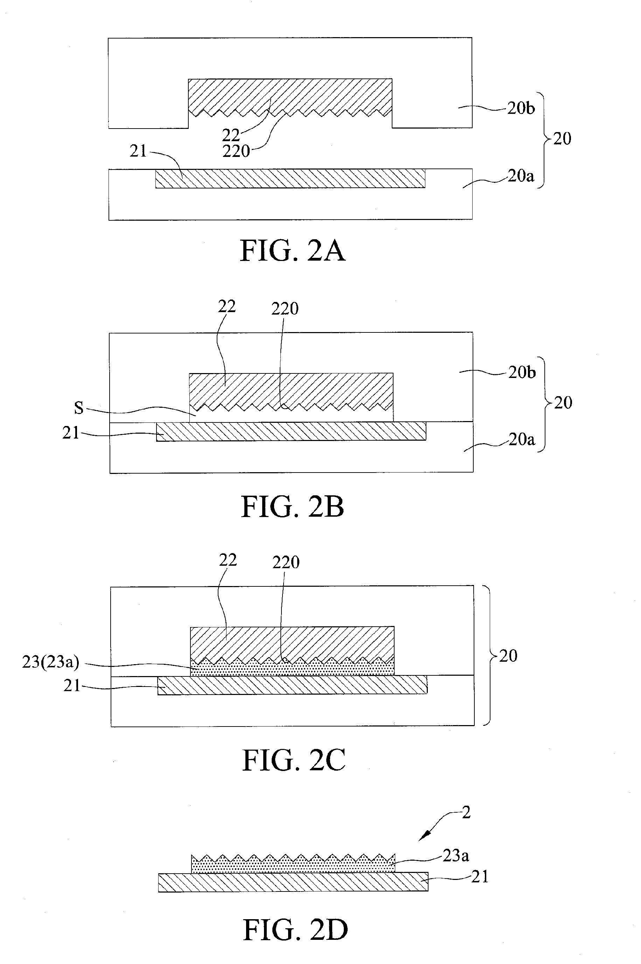

FIGs. 2A to 2D show a fabrication method of a lens 2 according to the present invention.

Referring to FIG. 2A, a mold 20 having a lower portion 20a and an upper portion 20b is provided. A glass substrate 21 is disposed in the lower portion 20a of the mold 20, and a molding board 22 having a patterned surface 220 is disposed in the upper portion 20b of the mold 20, wherein the patterned surface 220 is exposed from the upper portion 20b of the mold 20. The patterned surface 220 is designed according to the specification of the lens to be fabricated.

Referring to FIG. 2B, the lower portion 20a and the upper portion 20b of the mold 20 are aligned and engaged with each other so as to allow the molding board 22 to be disposed over the glass substrate 21, in a manner that the patterned surface 220 of the molding board 22 faces the glass substrate 21 and a molding space S is formed between the patterned surface 220 of the molding board 22 and the glass substrate 21.

Referring to FIG. 2C, a light-transmissive thermosetting compound 23 is introduced into the molding space S by injection molding such that the light-transmissive compound 23 is formed into a light-transmissive body 23a directly adhered to the glass substrate 21, after the molding process is completed. Accordingly, the surface of the light-transmissive body 23a that is attached to the molding board 22 is provided with a pattern corresponding to the patterned surface 220 of the molding board 22, so as for the light-transmissive body 23a to obtain a lens effect. In an embodiment of the present invention, the light-transmissive compound 23 is silicone or optical silicone.

Referring to FIG. 2D, after the light-transmissive body 23a is cured, the lower portion 20a and the upper portion 20b of the mold 20 are separated from each other to thereby separate the molding board 22 from the light-transmissive body 23a. Further, the glass substrate 21 is taken out from the lower portion 20a of the mold 20, thus obtaining the lens 2 consisting of the glass substrate 21 and the light-transmissive 23a disposed on the glass substrate 21.

The present invention directly forms a light-transmissive body 23a on the glass substrate 21 by injection molding without the need to apply an adhesive layer between the light-transmissive body 23a and the glass substrate 21 as in the prior art, thereby reducing the fabrication cost and material cost, reducing the overall thickness of the lens 2 and facilitating thinning of the lens 2.

Further, various kinds of SOG lenses, such as Fresnel lenses, can be fabricated through injection molding.

The present invention further provides a lens, which comprises a glass substrate, and a silicone layer directly adhered to the glass substrate and having a pattern formed on an outer surface thereof In an embodiment of the present invention, the silicone layer is made of optical silicone and directly adhered to the glass substrate.

Therefore, by directly applying optical silicone material on a glass substrate to thus form the aforementioned silicone layer, the present invention reduces the fabrication cost and overall thickness of the lens and facilitates thinning of the lens.

The above-described descriptions of the detailed embodiments are only to illustrate the preferred implementation according to the present invention, and it is not to limit the scope of the present invention, Accordingly, all modifications and variations completed by those with ordinary skill in the art should fall within the scope of present invention defined by the appended claims.

## Claims

1. A fabrication method of a lens, comprising the steps of:
disposing a molding board having a patterned surface over a glass substrate in a manner that the patterned surface faces the glass substrate and a molding space is formed between the patterned surface of the molding board and the glass substrate;
introducing a light-transmissive compound into the molding space so as to mold the light-transmissive compound to form a light-transmissive body having a surface attached to the molding board with a pattern corresponding to the patterned surface; and
removing the molding board while maintaining the light-transmissive body to be adhered to the glass substrate.

2. The method of claim 1, wherein the glass substrate and the molding board are disposed in a mold.

3. The method of claim 1, wherein the light-transmissive compound is introduced into the molding space by injection molding.

4. The method of claim 1, wherein the light-transmissive body is directly adhered to the glass substrate.

5. The method of claim 1, wherein the light-transmissive compound is a thermosetting compound.

6. The method of claim 1, wherein the light-transmissive compound is silicone.

7. The method of claim 6, wherein the light-transmissive compound is optical silicone.

8. A lens, comprising:
a glass substrate; and
a silicone layer adhered to the glass substrate and having a pattern formed on an outer surface thereof.

9. The lens of claim 8, wherein the silicone layer is made of optical silicone.

10. The lens of claim 8, wherein the silicone layer is directly adhered to the glass substrate.
